# EUROPEAN PATENT SPECIFICATION

(11) **EP 2 482 398 B1**
(45) Date of publication and mention of the grant of the patent: **01.06.2016**
(21) Application number: 11010275.3
(22) Date of filing: 29.12.2011
(51) Int. Cl.: H02B 1/22, H02G 5/06, H02B 1/21

(54) **Bus bar system**
Sammelschienensystem
Système de barre omnibus

(30) Priority: 27.01.2011 CN 201120027941 U
(43) Date of publication of application: 01.08.2012
(73) Proprietor: Schneider Electric Industries SAS, 92500 Rueil-Malmaison (FR)
(72) Inventor: Guo, Xiaolong, Pudong, Shanghai 201203 (CN); Brun, Gregoire, 92500 Rueil Malmaison (FR); Ye, Qipeng, Pudong Shanghai 201203 (CN)
(74) Representative: Manitz, Finsterwald & Partner GbR

(56) References cited:
- EP-A1- 0 025 947
- DE-U- 1 996 092
- US-A- 3 113 820

## Description

### Technical Field

This application relates to a bus bar system which is connected to two-way load end of power conversion device, which converges the two-way outlet end of an automatic conversion device to a one-way outlet end for connection by user. The features of the preamble of the independent claim are known from DE 19 96 092 U.

### Background Art

When the two-way power supply, it's not two power supply run parallel but one is a common power supply, and the other is a backup power supply or one is a backup power supply for the other. When the power supply used is something wrong and stops supplying power, the Important load being stopped supplying power is switched to the other power supply by the power conversion device, so that the load continue to be supplied power. In order to facilitate wiring, the two-way load end of the power conversion device commonly connects to a bus bar system, which converge the two-way outlet end of an automatic conversion device to a one-way outlet end.

In the existing bus bar system, one is press the bus conductor from a thermosetting plastic to a solid body, to realize the insulation between the bus conductors, and to act as a protective shell. Because of using the solid structure, the weight is large and the materials are consumed more. Because of using the thermosetting plastic mould, the material cost is high, and cannot be recycled, which does not comply with the concept of environmental protection. And because of the need for large press machine to carry out processing, manufacturing cost is also high. The other is attaching an insulating layer on the outer surface of each phase bus conductor, to realize the insulation among the bus conductors, and putting the bus conductors into plastic shells, to reach a certain degree of shell protection. The cost and manufacturing difficulty of this kind of bus bar is reduced somehow, but it still need a production process, that is, attaching the additional insulating layer on the outer surface of the conductors, which is generally sleeving the heat-shrinkable tube on the conductor, which not only additionally increases the cost of the heat-shrinkable tube, but also increases the labor cost. And there is a need for processing four different kinds of bus conductors, in addition to the high cost of the mold, also increasing the inventory, so enhancing the cost.

### Summary of Invention

Aiming at solving the above-mentioned problem of the traditional bus system, this application provides a bus bar system which is low-cost and easy to manufacture. The bus bar system of the present invention is defined in the independent claim.

According to one embodiment of the present application, it provides a bus bar system, including: a upper plastic shell; a lower plastic shell; a first bus conductor assembly; a second bus conductor assembly; wherein, the first bus conductor assembly and the second bus conductor assembly comprise a plurality of conductor components respectively, a V-shaped bus bar assembly is formed by the corresponding conductor components of the first bus conductor assembly and the second bus conductor assembly by overlapping; and the two bus conductor assemblies are sandwiched and fixed between the upper plastic shell and the lower plastic shell.

One conductor component of the first bus conductor assembly comprises an upper port, a lower port and a middle part connected between the upper port and the lower port, the said conductor component has a substantial S-shape, and the upper port, the lower port and the middle part between the upper port and the lower port are In the same plane.

One conductor component of the second bus conductor assembly comprises an upper port, a lower port and a middle part connected between the upper port and the lower port, the said conductor component is substantial S-shape, the upper port and the lower port is in the same plane, and the middle part between the upper port and the lower port is arc-shaped or arched, and the middle part which is arc-shaped or arched lies over the plane where the upper port and the lower port are located, i.e. the middle part is not in the same plane as the plane where the upper port and the lower port are located.

The lower port of the one conductor component of the first bus conductor assembly and the corresponding lower port of the one conductor component of the second bus conductor assembly overlap and the upper port of the one conductor component of the first bus conductor assembly and the corresponding upper port of the one conductor component of the second bus conductor assembly are separate, so as to form a V-shape bus bar.

The plurality of lower ports of corresponding conductor component in each of the first and the second bus conductor assembly overlap, and the plurality of corresponding upper ports of conductor component in each of the first and the second bus conductor assembly are separate, so as to form a V-shape bus bar assembly including the plurality of V-shape bus bars arranged side by side, wherein the plurality of upper ports of conductor component of the first bus conductor assembly and the plurality of upper ports of conductor component of the second bus conductor assembly are arranged in sequence and the overlapped lower ports are arranged in sequence.

Mounting grooves for mounting the plurality of conductor components of the first bus conductor assembly are formed in the lower plastics shell, and the mounting groove adjacent to each other are electrically insulated.

Mounting grooves for mounting the plurality of conductor components of the second bus conductor assembly are formed in the upper plastics shell, and the mounting groove adjacent to each other are electrically insulated.

When the upper plastics shell and the lower plastics shell are assembled together, the corresponding mounting grooves in them are arranged as V-shape to each other, so as to house a plurality of V-shape bus bars arranged side by side.

When the lower ports of the plurality of conductor components of the first bus conductor assembly and the corresponding lower ports of the plurality of conductor components of the second bus conductor assembly overlap respectively and the upper ports of the plurality of conductor components of the first bus conductor assembly and the corresponding upper ports of the plurality of conductor components of the second bus conductor assembly are separate, and each of the middle part for making connection between the upper port and the lower part of every conductor component of the second bus conductor assembly is arc-shaped or in form of arch, so that electrical clearance is formed between the first bus conductor assembly and the second bus conductor assembly.

In the plurality of V-shape bus bar, the terminals of the upper ports separated from each other expose out of the shell to connect to a port of a circuit breaker, so as to connect to the common power supply and backup power supply and the terminal of lower ports overlapped are used for connecting load.

According to another embodiment of the present application, a heat dissipation protruding part (not shown) is arranged on the outer surface of every conductor component of the first and the second bus conductor assemblies.

According to an embodiment of the present application, the bus bar system is four-way in common use and is configured to V-shape, the lower part of the bus bar adopting overlap jointing manner. The insulation among the bus bars using the features of the shell saves the using of the other insulating materials.

According to the embodiment of the present application, the weight of the bus bar system is much lighter, such that it's convenient for user to carry and mount and its cost is much lower and it can save the expense for user.

### Brief description of the accompanying drawings

The drawings depicted here is only for schematically illustrating the selected embodiments, not including all possible embodiments that can be performed, and also not for restricting the scope of the present application.
Figure 1 shows the appearance of an assembled bus bar system according to one embodiment of the present application;
Figure 2 shows the structure of one of conductor components of the first bus conductor assembly in detail and the structure of one of conductor components of the second bus conductor assembly in detail;
Figure 3 shows a plurality of V-shape bus bars arranged side by side which are formed by a plurality of corresponding conductor components in each of the first and the second bus conductor assembly;
Figure 4 shows an exploded view of the bus bar system according to one embodiment of the present application;
Figure 5 shows the connection manner among the bus bar system according to one embodiment of the present application, backup power supply and load.

### Embodiment

All features of this application become apparent from the following specific description of the preferred embodiment and the description is only for illustration purpose and not limited by the figures.

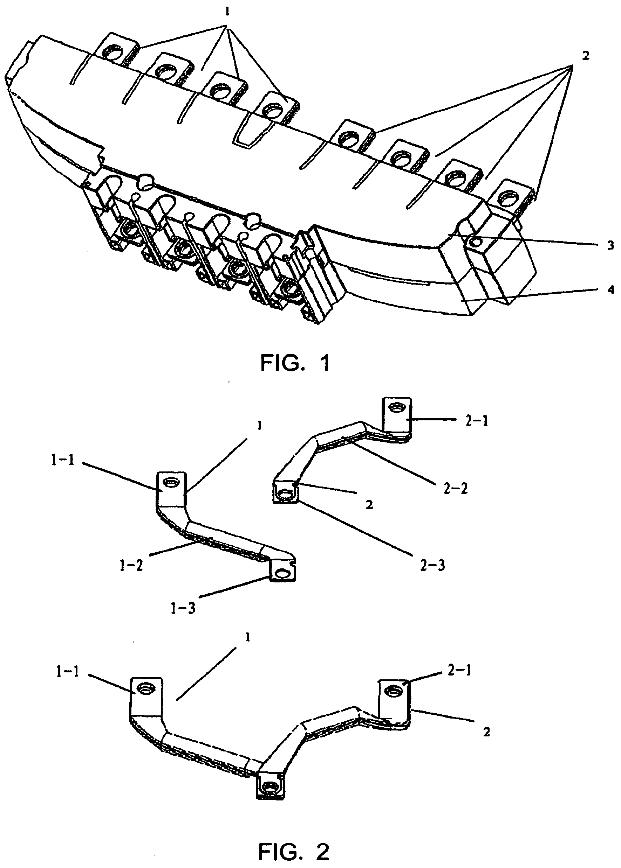

Figure 1 shows the appearance of an assembled bus bar system according to one embodiment of the present application. The bus bar system comprises an upper plastic shell 3, a lower plastic shell 4 and the V-shaped bus bar assembly being overlapped by a first bus conductor assembly 1 and a second bus conductor assembly 2. Every bus conductor assembly comprises a plurality of conductor components respectively. As shown in Fig.1, the first assembly 1 and the second bus conductor assembly, 2 comprise four conductor components respectively, the upper plastic shell 3 and the lower plastic shell 4 sandwich and fix the bus bar assembly between them.

Next, we take one of conductor components of the first bus conductor assembly 1 as an example for description. Other conductor components have the same structure. As shown in Fig.2, one of conductor components of the first bus conductor assembly 1 comprises an upper port 1-1, a lower port 1-3 and a middle part 1-2 connected between the upper port and the lower port. The conductor component is substantially S-shape, wherein the upper port 1-1, the lower port 1-3 and the middle part 1-2 connected between the upper port and the lower port are in the same plane.

Next, we take one of conductor components of the second bus conductor assembly 2 as an example for description. Other conductor components having the same structure. As shown in Fig.2, one of conductor components of the second bus conductor assembly 2 comprises an upper port 2-1, a lower port 2-3 and a middle part 2-2 connected between the upper port and the lower port. The conductor component is substantially S-shape, wherein the upper port 2-1 and the lower port 2-3 are substantially in the same plane, and the middle part 2-2 connected between the upper port and the lower port is arc-shape or in form of arch, and the middle part 2-2 which is arc-shape or arched lies over the same plane which the upper port 2-1 and the lower port 2-3 are located, i.e. the middle part 2-2 not being in the same plane as the plane which the upper port 2-1 and the lower port 2-3 are located.

As shown in Fig.2, the lower port 1-3 of the one conductor component of the first bus conductor assembly 1 and the corresponding lower port 2-3 of the one conductor component of the second bus conductor assembly 2 overlap and the upper port 1-1 of the one conductor component of the first bus conductor assembly 1 and the corresponding upper port 2-1 of the one conductor component of the second bus conductor assembly 2 are separate, so as to form a V-shape bus bar.

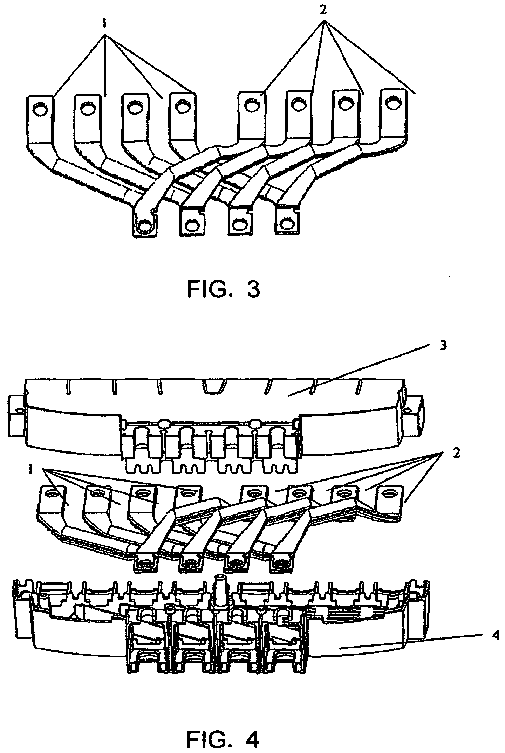

As shown in Fig.3, the four corresponding conductor components in each of the first and the second bus conductor assembly form four V-shape bus bars arranged side by side.

It can be further known from Fig.3 that a plurality of lower ports of corresponding conductor components in each of the first and the second bus conductor assembly overlap, and a plurality of upper ports of corresponding conductor components in each of the first and the second bus conductor assembly are separate, so as to form a bus bar assembly including a plurality of V-shape bus bars arranged side by side. The lower ports overlapped are fixed with the lead wire by a user, and a plurality of V-shape bus bars can be arranged to form multiple polar bus bars.

Figure 4 shows an exploded view of the bus bar system according to one embodiment of the present application.

In the lower plastic shell 4 as shown in Fig.4, a plurality of mounting grooves for mounting the plurality of conductor components of the first bus conductor assembly 1 are formed(there are four in Fig.4), the mounting groove adjacent to each other being electrically insulating. Correspondingly, in the upper plastic shell 3 as shown in Fig.4, a plurality of mounting grooves for mounting a plurality of conductor components of the second bus conductor assembly 2 are formed(there are four in Fig.4), the mounting groove adjacent to each other being electrically insulating too. When the upper plastic shell 3 and the lower plastic shell 4 are mounted together, the corresponding mounting grooves are V-shape so as to house the bus bars which are V-shape too. In this manner, the insulation among the plurality of conductor components of the first bus conductor assembly 1 and the insulation among the plurality of conductor components of the second bus conductor assembly 2 are obtained by the structure feature of the mounting grooves on the upper and lower plastic shell. Still as shown in Fig.4, when the lower ports 1-3 of the plurality of conductor components of the first bus conductor assembly 1 and the corresponding lower ports 2-3 of the plurality of conductor components of the second bus bar assembly 2 respectively overlap and the upper ports 1-1 of the plurality of conductor components of the first bus conductor assembly 1 and the corresponding upper ports of the plurality of conductor components of the second bus conductor assembly are separate. Because each of the middle parts 2-2 for making connection between the upper port and the lower part of every conductor component of the second bus conductor assembly 2 is arc-shaped or in form of arch, so electrical clearance is obtained between the first bus conductor assembly 1 and the whole of the second bus conductor assembly 2. In this manner, the insulation between the first bus conductor assembly 1 and the whole of the second bus conductor assembly 2 is achieved by keeping enough electrical clearance between them.

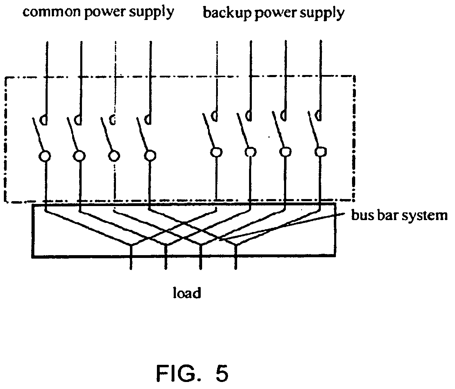

Figure 5 shows the connection among the bus bar system according to one embodiment of the present application, backup power supply and load.

As shown in Fig.5, the bus bar system formed by a plurality of V-shape bus bars is fixed in the upper and lower plastic shells, the terminal of the upper port separated from each other expose to out of the shell to connect to a port of a circuit breaker, so as to connect to the common power supply and backup power supply and the terminal of lower ports overlapped are used for connecting the load.

According to another embodiment of the present application, for increasing the performance of temperature enhancing, a heat dissipating protruding part is arranged on the outer surface of conductor components of the bus conductor assembly.

Although for the schematic purpose, this application has detailed the most useful and selected embodiment which can be considered at present, it's appreciated that these details are just for schematic and the application is not limited to the embodiments disclosed. On the contrary, it's used for covering the improvement and like scheme in the scope of the appended claims.

## Claims

1. A bus bar system, including:
a first bus conductor assembly (1) comprising a plurality of first conductor components; and
a second bus conductor assembly (2) comprising a plurality of second conductor components;
wherein
each of the first conductor components comprises a first upper port (1-1), a first lower port (1-3) and a first middle part (1-2) connected between the first upper port (1-1) and the first lower port (1-3), and the first upper port (1-1), the first lower port (1-3) and the first middle part (1-2) are in the same plane,
each of the second conductor components comprises a second upper port (2-1), a second lower port (2-3) and a second middle part (2-2) connected between the second upper port (2-1) and the second lower port (2-3), and the second upper port (2-1) and the second lower port (2-3) is in the same plane,
each first lower port (1-3) and the corresponding second lower port (2-3) overlap and each first upper port (1-1) and the corresponding second upper port (2-1) are separate, so as to form a plurality of bus bars side-by-side, and the plurality of the first upper ports (1-1) and the plurality of the second upper ports (2-1) are arranged in sequence and the overlapped first and second lower ports (1-3, 2-3) are arranged in sequence,
**characterized in that**
each of the first conductor component has a substantial S-shape,
each of the second conductor component has a substantial S-shape,
the plurality of the bus bars are V-shape bus bars,
the second middle part (2-2) is arc-shaped or arched and is not in the same plane as the plane where the second upper port (2-1) and the second lower port (2-3) are located, so that electrical clearance is formed between the first bus conductor assembly (1) and the second bus conductor assembly (2), and
the bus bar system further comprises an upper plastic shell (3) and a lower plastic shell (4), and the first and second bus conductor assemblies (1, 2) are sandwiched and fixed between the upper plastic shell (3) and the lower plastic shell (4).

2. The bus bar system according to claim 1, wherein
first mounting grooves for mounting the plurality of the first conductor components are formed in the lower plastic shell (4) and the first mounting grooves adjacent to each other are electrically insulated.

3. The bus bar system according to claim 1 or 2, wherein
second mounting grooves for mounting the plurality of second conductor components are formed in the upper plastic shell (3) and the second mounting grooves adjacent to each other are electrically insulated.

4. The bus bar system according to claims 2 and 3, wherein
when the upper plastic shell (3) and the lower plastic shell (4) are assembled together, the corresponding first and second mounting grooves are arranged in V-shape with each other, so as to house the plurality of V-shape bus bars arranged side by side.

5. The bus bar system according to any one of claims 1 to 4, wherein
in the plurality of V-shape bus bars, the terminals of the first and second upper ports (1-1, 2-1) separated from each other expose out of a shell formed by the upper plastic shell (3) and the lower plastic shell (4) to connect to a port of a circuit breaker, so as to connect to a common power supply and a backup power supply and the terminals of the first and second lower ports (1-3, 2-3) overlapped are used for connecting load.

6. The bus bar system according to any one of claims 1 to 5, wherein
a heat dissipating protruding part is arranged on the outer surface of each of the first and second conductor components.

## Patentansprüche

1. Sammelschienensystem, umfassend:
eine erste Sammelleiteranordnung (1), die eine Vielzahl erster Leiterkomponenten umfasst; und
eine zweite Sammelleiteranordnung (2), die eine Vielzahl zweiter Leiterkomponenten umfasst;
wobei
jede der ersten Leiterkomponenten einen ersten oberen Anschluss (1-1), einen ersten unteren Anschluss (1-3) und ein erstes Mittelteil (1-2) umfasst, welches zwischen dem ersten oberen Anschluss (1-1) und dem ersten unteren Anschluss (1-3) angeordnet und mit diesen verbunden ist, und der erste obere Anschluss (1-1), der erste untere Anschluss (1-3) und das erste Mittelteil (1-2) in der gleichen Ebene liegen;
jede der zweiten Leiterkomponenten einen zweiten oberen Anschluss (2-1), einen zweiten unteren Anschluss (2-3) und ein zweites Mittelteil (2-2) umfasst, welches zwischen dem zweiten oberen Anschluss (2-1) und dem zweiten unteren Anschluss (2-3) angeordnet und mit diesen verbunden ist, und der zweite obere Anschluss (2-1) und der zweite untere Anschluss (2-3) in der gleichen Ebene liegen,
jeder erste untere Anschluss (1-3) und der entsprechende zweite untere Anschluss (2-3) einander überlagern und jeder erste obere Anschluss (1-1) und der entsprechende zweite obere Anschluss (2-1) getrennt sind, um eine Vielzahl von Sammelschienen nebeneinander zu bilden, und die Vielzahl der ersten oberen Anschlüsse (1-1) und die Vielzahl der zweiten oberen Anschlüsse (2-1) der Reihe nach angeordnet sind und die einander überlagernden ersten und zweiten unteren Anschlüsse (1-3, 2-3) der Reihe nach angeordnet sind,
**dadurch gekennzeichnet, dass**
jede der ersten Leiterkomponenten im Wesentlichen eine S-Form aufweist,
jede der zweiten Leiterkomponenten im Wesentlichen eine S-Form aufweist,
die Vielzahl der Sammelschienen aus V-förmigen Sammelschienen besteht,
das zweite Mittelteil (2-2) bogenförmig oder gebogen ist und nicht in der gleichen Ebene liegt, in der der zweite obere Anschluss (2-1) und der zweite untere Anschluss (2-3) angeordnet sind, so dass zwischen der ersten Sammelleiteranordnung (1) und der zweiten Sammelleiteranordnung (2) ein elektrischer Zwischenraum ausgebildet ist, und
wobei das Sammelschienensystem ferner eine obere Kunststoffhülle (3) und eine untere Kunststoffhülle (4) umfasst und die erste und zweite Sammelleiteranordnung (1, 2) zwischen der oberen Kunststoffhülle (3) und der unteren Kunststoffhülle (4) eingelegt und daran befestigt sind.

2. Sammelschienensystem nach Anspruch 1, wobei
erste Montagerillen zum Montieren der Vielzahl der ersten Leiterkomponenten in der unteren Kunststoffhülle (4) ausgebildet sind und die zueinander benachbarten ersten Montagerillen elektrisch isoliert sind.

3. Sammelschienensystem nach Anspruch 1 oder 2, wobei
zweite Montagerillen zum Montieren der Vielzahl der zweiten Leiterkomponenten in der oberen Kunststoffhülle (3) ausgebildet sind und die zueinander benachbarten zweiten Montagerillen elektrisch isoliert sind.

4. Sammelschienensystem nach Anspruch 2 und 3, wobei
dann, wenn die obere Kunststoffhülle (3) und die untere Kunststoff-hülle (4) miteinander zusammengebaut sind, die korrespondierenden ersten und zweiten Montagerillen zueinander in einer V-Form angeordnet sind, um die Vielzahl der V-förmigen Sammelschienen, die nebeneinander angeord-net sind, unterzubringen.

5. Sammelschienensystem nach einem der Ansprüche 1 bis 4, wobei
bei der Vielzahl der V-förmigen Sammelschienen die Kontakte der ersten und zweiten voneinander getrennten oberen Anschlüsse (1-1, 2-1) aus einer Hülle, die durch die obere Kunststoffhülle (3) und die untere Kunststoffhülle (4) gebildet wird, zum Verbinden mit einem Anschluss eines Stromunterbrechers hervorstehen, um sie mit einer Standardstromversorgung und einer Reservestromversorgung zu verbinden, und die Kontakte der einander überlagernden ersten und zweiten unteren Abschlüsse (1-3, 2-3) zum Verbinden mit einer Last verwendet werden.

6. Sammelschienensystem nach einem der Ansprüche 1 bis 5, wobei
ein Wärme dissipierendes hervorstehendes Teil an der Außenoberfläche jeder der ersten und zweiten Leiterkomponenten angeordnet ist.

## Revendications

1. Système à barres de bus, incluant :
un premier assemblage de conducteur de bus (1) comprenant une pluralité de premiers composants conducteurs ; et
un second assemblage de conducteur de bus (2) comprenant une pluralité de seconds composants conducteurs ;
dans lequel
chacun des premiers composants conducteurs comprend un premier port supérieur (1-1), un premier port inférieur (1-3) et une première partie médiane (1-2) connectée entre le premier port supérieur (1-1) et le premier port inférieur (1-3), et le premier port supérieur (1-1), le premier port inférieur (1-3) et la première partie médiane (1-2) sont dans le même plan,
chacun des seconds composants conducteurs comprend un second port supérieur (2-1), un second port inférieur (2-3) et une seconde partie médiane (2-2) connectée entre le second port supérieur (2-1) et le second port inférieur (2-3), et le second port supérieur (2-1) et le second port inférieur (2-3) sont dans le même plan,
chaque premier port inférieur (1-3) et le second port inférieur correspondant (2-3) se recouvrent et chaque premier port supérieur (1-1) et le second port supérieur correspondant (2-1) sont séparés, de manière à former une pluralité de barres de bus côte à côte, et la pluralité de premiers ports supérieurs (1-1) et la pluralité de seconds ports supérieurs (2-1) sont agencés en séquence et les premiers et les seconds ports inférieurs (1-3, 2-3) qui se recouvrent sont agencés en séquence,
**caractérisé en ce que**
chacun des premiers composants conducteurs a sensiblement une forme en S,
chacun des seconds composants conducteurs a sensiblement une forme en S,
la pluralité de barres de bus sont des barres de bus en forme de V,
la seconde partie médiane (2-2) est arquée ou en forme d'arc, et n'est pas dans le même plan que le plan dans lequel sont situés le second port supérieur (2-1) et le second port inférieur (2-3), de sorte qu'un espace électrique est formé entre le premier assemblage de conducteur de bus (1) et le second assemblage de conducteur de bus (2), et
le système de barres de bus comprend en outre une coque supérieure en matière plastique (3) et une coque inférieure en matière plastique (4), et le premier et le second assemblage de conducteur de bus (1, 2) sont pris en sandwich et fixés entre la coque supérieure en matière plastique (3) et la coque inférieure en matière plastique (4).

2. Système de barres de bus selon la revendication 1, dans lequel des premières gorges de montage pour monter la pluralité de premiers composants conducteurs sont formées dans la coque inférieure en matière plastique (4) et les premières gorges de montage mutuellement adjacentes sont isolées électriquement.

3. Système de barres de bus selon la revendication 1 ou 2, dans lequel des secondes gorges de montage pour monter la pluralité de seconds composants conducteurs sont formées dans la coque supérieure en matière plastique (3) et les secondes gorges de montage mutuellement adjacentes sont isolées électriquement.

4. Système de barres de bus selon les revendications 2 et 3, dans lequel quand la coque supérieure en matière plastique (3) et la coque inférieure en matière plastique (4) sont assemblées ensemble, les premières et des secondes gorges de montage correspondantes sont agencées en formant un V l'une avec l'autre, de manière à abriter la pluralité de barres de bus en forme de V agencées côte à côte.

5. Système de barres de bus selon l'une quelconque des revendications 1 à 4, dans lequel
dans la pluralité de barres de bus en forme de V, les bornes des premiers et des seconds ports supérieurs (1-1, 2-1) séparés les uns des autres sont exposées à l'extérieur d'une coque formée par la coque supérieure en matière plastique (3) et la coque inférieure en matière plastique (4) pour être connectées à un port d'un coupe-circuit, de manière à être connectées à une alimentation de puissance commune et à une alimentation de puissance de secours, et les bornes des premiers et des seconds ports inférieurs (1-3, 2-3) qui se chevauchent sont utilisées pour connecter une charge.

6. Système de barres de bus selon l'une quelconque des revendications 1 à 5, dans lequel
une partie de dissipation de chaleur en projection est agencée sur la surface extérieure de chacun des premiers et des seconds composants conducteurs.
